# EUROPEAN PATENT APPLICATION

(11) **EP 4 782 284 A1**
(43) Date of publication of application: **29.07.2026**
(21) Application number: 23953354.0
(22) Date of filing: 25.09.2023
(51) Int. Cl.: B60R 21/38, B60R 21/34, B60R 21/013

(54) **ENGINE HOOD CONTROL APPARATUS AND METHOD, AND VEHICLE**

(71) Applicant: Yinwang Intelligent Technologies Co., Ltd., Shenzhen, Guangdong 518110 (CN)
(72) Inventor: LI, Dongyan, Shenzhen, Guangdong 518129 (CN); HUA, Peng, Shenzhen, Guangdong 518129 (CN); ZHANG, Siliang, Shenzhen, Guangdong 518129 (CN); ZHANG, Jing, Shenzhen, Guangdong 518129 (CN); KONG, Qingshuai, Shenzhen, Guangdong 518129 (CN); WAN, Yinhui, Shenzhen, Guangdong 518129 (CN)
(74) Representative: Gill Jennings & Every LLP
(86) International application number: PCT/CN2023/121257
(87) International publication number: WO 2025/065190

(57) **Abstract**

An engine hood control apparatus is provided, where the engine hood control apparatus includes a sensor, a processor, and a lifting apparatus. The sensor is configured to obtain environment information. The processor is configured to: determine, based on the environment information, that a pedestrian collides with a vehicle, and control the lifting apparatus to lift an engine hood of the vehicle when the pedestrian collides with the vehicle. In addition, an engine hood control method and a vehicle including the engine hood control apparatus are provided. The engine hood control apparatus lifts the engine hood before the head of the pedestrian collides with the engine hood of the vehicle. This reduces a degree of injury to the head of the pedestrian, reduces a case in which the engine hood is mistakenly lifted, and ensures user experience of the vehicle.

## Description

### TECHNICAL FIELD

This application relates to the field of vehicle control technologies, and in particular, to an engine hood control apparatus and method, and a vehicle.

### BACKGROUND

According to related statistics, in a traffic accident, if a pedestrian collides with a hard component at a front end of a vehicle, the head of the pedestrian is more vulnerable to serious injury. A reason is that, when the pedestrian collides with the hard component at the front end of the vehicle, a lower leg of the pedestrian is in first contact with a bumper at the front end of the vehicle, and then the lower leg is forcibly pushed forward by the bumper. As a result, the upper body of the pedestrian moves toward an engine hood of the vehicle, and the head collides with the engine hood.

As we know, injury to the head of the pedestrian is highly likely to endanger life. Therefore, how to protect the head of the pedestrian as much as possible in a traffic accident is an urgent problem to be resolved.

To protect the head of the pedestrian as much as possible in the traffic accident, a pop-up engine hood is usually used. When an object is in contact with the bumper at the front end of the vehicle, a pressure sensor disposed at the front end of the vehicle may sense the collision event, and the engine hood is controlled to pop up to minimize collision strength between the object and the engine hood.

However, in the foregoing conventional method, when the object in contact with the bumper at the front end of the vehicle is not a pedestrian, the engine hood is also triggered to pop up, affecting user experience.

### SUMMARY

This application provides an engine hood control apparatus and method, and a vehicle. An engine hood is lifted before a head of a pedestrian collides with the engine hood of the vehicle. This reduces a degree of injury to the head of the pedestrian, reduces a case in which the engine hood is mistakenly lifted, and ensures user experience of the vehicle.

To achieve the foregoing objective, this application uses the following technical solutions.

According to a first aspect, an engine hood control apparatus is provided, including a sensor, a processor, and a lifting apparatus.

The sensor is configured to obtain environment information. The processor is configured to: determine, based on the environment information, that a pedestrian collides with a vehicle, and control the lifting apparatus to lift an engine hood of the vehicle when the pedestrian collides with the vehicle.

The apparatus may determine, based on the environment information, whether the pedestrian collides with the vehicle, and may lift the engine hood when the pedestrian collides with the vehicle. After the pedestrian collides with the vehicle, the head of the pedestrian may collide with the engine hood. Lifting the engine hood when the pedestrian collides with the vehicle may also be understood as lifting the engine hood before the head of the pedestrian collides with the engine hood. In this way, sufficient lifting time can be reserved, to ensure that the engine hood has been lifted when the head of the pedestrian collides with the engine hood. A collision distance between the head of the pedestrian and the engine hood has been reduced, and collision strength between the head of the pedestrian and the engine hood has also been greatly reduced. This reduces a degree of injury to the head of the pedestrian.

In addition, the engine hood is lifted when it is determined that the pedestrian collides with the vehicle. This can reduce a case in which the engine hood is lifted due to a collision between a non-pedestrian and the vehicle. In other words, a case in which the engine hood is mistakenly lifted can be reduced, and user experience of the vehicle can be ensured.

In an implementation of the first aspect, the lifting apparatus includes a spring, a guard for compressing the spring, and a motor connected to the guard. The processor is further specifically configured to: when the pedestrian collides with the vehicle, control the motor to drive the guard to move, to release the spring, and further control the engine hood to be lifted.

In this implementation, the lifting apparatus is an apparatus that can be repeatedly used for a plurality of times. After the spring is released, the spring may be further compressed again, and wait to be released by the guard next time. In this way, replacement costs of the vehicle user can be greatly reduced. In addition, even if the engine hood pops up due to a collision between the vehicle and a non-pedestrian, the lifting apparatus can be used again, to prevent the user from reinstalling the entire lifting apparatus, thereby greatly improving user experience of the vehicle.

In an implementation of the first aspect, the lifting apparatus further includes a positioning pin. The positioning pin is disposed on the guard, and the positioning pin is configured to fasten a hinge of the engine hood. The processor is further specifically configured to control the motor to drive the guard to move, to drive the positioning pin to move to release the hinge, and to further release the engine hood for the engine hood to be lifted.

In this implementation, when the motor drives the guard to rotate, the guard may drive the positioning pin to move, to bring the positioning pin out of a fixed position on the hinge, so as to release the hinge. After the hinge is released, a root of the engine hood is also released, and then the engine hood is also released. The engine hood may be lifted by the spring.

In an implementation of the first aspect, the lifting apparatus includes a shape memory spring, and the shape memory spring is in a compressed state when being powered off. The processor is further specifically configured to: when the pedestrian collides with the vehicle, control the shape memory spring to be powered on to release the shape memory spring, to control the engine hood to be lifted.

In this implementation, the lifting apparatus is an apparatus that can be repeatedly used for a plurality of times. After the shape memory spring is released, the shape memory spring may also be powered off again, to restore to the compressed state, and wait for a next power-on to be released. In this way, replacement costs of the vehicle user can be greatly reduced. In addition, even if the engine hood pops up due to a collision between the vehicle and a non-pedestrian, the lifting apparatus can be used again, to prevent the user from reinstalling the entire lifting apparatus, thereby greatly improving user experience of the vehicle.

In an implementation of the first aspect, the lifting apparatus includes an electromagnet, and the electromagnet is configured to attract the engine hood when being powered on, to control the engine hood to be closed. The processor is further specifically configured to: when the pedestrian collides with the vehicle, control the electromagnet to be powered off, to control the engine hood to be lifted.

In this implementation, the lifting apparatus is an apparatus that can be repeatedly used for a plurality of times. After the electromagnet is powered off, the electromagnet may be further powered on again to attract the engine hood, and wait for a next power-off to release the engine hood. In this way, replacement costs of the vehicle user can be greatly reduced. In addition, even if the engine hood pops up due to a collision between the vehicle and a non-pedestrian, the lifting apparatus can be used again, to prevent the user from reinstalling the entire lifting apparatus, thereby greatly improving user experience of the vehicle.

In an implementation of the first aspect, the processor is specifically configured to determine, based on the environment information, that a collision object of the vehicle is a pedestrian. In this way, interference caused by the collision between the non-pedestrian and the vehicle can be eliminated, and a case in which the engine hood is mistakenly lifted due to the collision between the non-pedestrian and the vehicle can be reduced.

In an implementation of the first aspect, the processor is further specifically configured to: when the collision object of the vehicle is a pedestrian, determine a probability of a collision between the pedestrian and the vehicle based on the environment information; and when the probability of the collision is greater than or equal to a preset threshold, determine that the pedestrian collides with the vehicle.

In this implementation, that the probability of the collision is greater than or equal to the preset threshold may indicate that the collision between the pedestrian and the vehicle is inevitable, that is, the pedestrian collides with the vehicle. In this case, the engine hood is lifted, to ensure that the engine hood has been lifted when the head of the pedestrian collides with the engine hood, the collision distance between the head of the pedestrian and the engine hood has been reduced, and the collision strength between the head of the pedestrian and the engine hood has also been greatly reduced. This reduces a degree of injury to the head of the pedestrian.

In an implementation of the first aspect, the processor is further specifically configured to: when the collision object of the vehicle is a pedestrian, determine time to collision between the pedestrian and the vehicle based on the environment information.

In an implementation of the first aspect, the processor is further specifically configured to: when the time to collision is within preset duration, control the lifting apparatus to lift the engine hood of the vehicle.

In this implementation, the engine hood is lifted when the time to collision is within the preset duration, and the engine hood may be lifted before the pedestrian collides with the vehicle, so that the engine hood is lifted before the head of the pedestrian collides with the engine hood. In this way, sufficient lifting time can be reserved, to ensure that the engine hood has been lifted when the head of the pedestrian collides with the engine hood. A collision distance between the head of the pedestrian and the engine hood has been reduced, and collision strength between the head of the pedestrian and the engine hood has also been greatly reduced. This reduces a degree of injury to the head of the pedestrian.

In an implementation of the first aspect, the processor is further specifically configured to: in response to a lifting signal received when the time to collision is within the preset duration, control the lifting apparatus to lift the engine hood of the vehicle.

In the foregoing implementation, if the collision between the pedestrian and the vehicle is inevitable, the processor may obtain the lifting signal when the time to collision is within the preset duration, and control, in response to the lifting signal, the lifting apparatus to lift the engine hood of the vehicle. In this way, the engine hood is lifted when the pedestrian collides with the vehicle.

In an implementation of the first aspect, the environment information includes a location of the pedestrian, a traveling direction of the pedestrian, a traveling speed of the pedestrian, a vehicle speed of the vehicle, and a traveling direction of the vehicle.

In an implementation of the first aspect, the processor is further specifically configured to: when the collision object of the vehicle is a pedestrian, receive a braking signal, and control a vehicle speed to decrease in response to the braking signal.

In this implementation, the vehicle speed may be reduced in advance. In some cases, braking can succeed before the vehicle collides with the pedestrian, to avoid starting the lifting apparatus. If the collision with the pedestrian cannot be avoided (that is, the probability of the collision is greater than or equal to the preset threshold), the vehicle speed can be reduced to some extent, impact force caused when the vehicle collides with the pedestrian can be reduced, and damage to the pedestrian can be reduced.

In addition, when the collision with the pedestrian cannot be avoided, the processor may also control the lifting apparatus to lift the engine hood in a time period during which the vehicle decelerates. That is, the engine hood is lifted during deceleration. In this way, impact force caused when the vehicle collides with the pedestrian is reduced, and the collision distance between the head of the pedestrian and the engine hood after the collision is also reduced. This reduces damage to the pedestrian from two aspects.

According to a second aspect, an engine hood control method is provided, and is applied to the foregoing engine hood control apparatus. The engine hood control apparatus includes a sensor, a processor, and a lifting apparatus. The method includes: The sensor obtains environment information; and the processor determines, based on the environment information, that a pedestrian collides with a vehicle, and controls the lifting apparatus to lift an engine hood of the vehicle when the pedestrian collides with the vehicle.

In an implementation of the second aspect, the lifting apparatus includes a spring, a guard for compressing the spring, and a motor connected to the guard. That the processor controls, when the pedestrian collides with the vehicle, the lifting apparatus to lift the engine hood of the vehicle includes: When the pedestrian collides with the vehicle, the processor controls the motor to drive the guard to move, to release the spring, so as to control the engine hood to be lifted.

In an implementation of the second aspect, the lifting apparatus further includes a positioning pin. The positioning pin is disposed on the guard, and the positioning pin is configured to fasten a hinge of the engine hood. The guard is configured to drive the positioning pin to move to release the hinge, to release the engine hood and lift the engine hood.

In an implementation of the second aspect, the lifting apparatus includes a shape memory spring, and the shape memory spring is in a compressed state when being powered off. That the processor controls the lifting apparatus to lift the engine hood of the vehicle when the pedestrian collides with the vehicle includes: When the pedestrian collides with the vehicle, the processor controls the shape memory spring to be powered on to release the shape memory spring, to control the engine hood to be lifted.

In an implementation of the second aspect, the lifting apparatus includes an electromagnet, and the electromagnet is configured to attract the engine hood when being powered on, to control the engine hood to be closed. That the processor controls, when the pedestrian collides with the vehicle, the lifting apparatus to lift the engine hood of the vehicle includes: When the pedestrian collides with the vehicle, the processor controls the electromagnet to be powered off, to control the engine hood to be lifted.

In an implementation of the second aspect, the method further includes: The processor determines, based on the environment information, that a collision object of the vehicle is a pedestrian.

In an implementation of the second aspect, that the processor determines, based on the environment information, that the pedestrian collides with the vehicle includes: When the collision object of the vehicle is the pedestrian, the processor determines a probability of a collision between the pedestrian and the vehicle based on the environment information; and when the probability of the collision is greater than or equal to a preset threshold, the processor determines that the pedestrian collides with the vehicle.

In an implementation of the second aspect, the method further includes: When the collision object of the vehicle is the pedestrian, the processor determines time to collision between the pedestrian and the vehicle based on the environment information.

In an implementation of the second aspect, that the processor controls the lifting apparatus to lift the engine hood of the vehicle when the pedestrian collides with the vehicle includes: When the time to collision is within preset duration, the processor controls the lifting apparatus to lift the engine hood of the vehicle.

In an implementation of the second aspect, the environment information includes a location of the pedestrian, a traveling direction of the pedestrian, a traveling speed of the pedestrian, a vehicle speed of the vehicle, and a traveling direction of the vehicle.

In an implementation of the second aspect, that the processor controls the lifting apparatus to lift the engine hood of the vehicle when the pedestrian collides with the vehicle includes: The processor controls, in response to a lifting signal received when the time to collision is within the preset duration, the lifting apparatus to lift the engine hood of the vehicle.

In an implementation of the second aspect, the method further includes: When the collision object of the vehicle is the pedestrian, the processor receives a braking signal, and controls a vehicle speed to decrease in response to the braking signal.

According to a third aspect, a vehicle is provided, including the engine hood control apparatus according to any one of the first aspect and the implementations of the first aspect.

According to a fourth aspect, a computer-readable storage medium is provided, including computer instructions. When the computer instructions are run on a vehicle, the vehicle is enabled to perform the engine hood control method in any one of the second aspect and the implementations of the second aspect.

According to a fifth aspect, a computer program product is provided. When the computer program product runs on a vehicle, the vehicle is enabled to perform the engine hood control method in any one of the second aspect and the implementations of the second aspect.

It may be understood that, for beneficial effect that can be achieved by the engine hood control method according to the second aspect, the vehicle according to the third aspect, the computer-readable storage medium according to the fourth aspect, and the computer program product according to the fifth aspect, refer to the beneficial effect in any one of the first aspect and the possible design manners of the first aspect. Details are not described herein again.

### BRIEF DESCRIPTION OF DRAWINGS

FIG. 1 is a diagram of time points in a control method applied to a pyrotechnic lifting apparatus according to an embodiment of this application;
FIG. 2 is a diagram 1 of a structure of an engine hood control apparatus according to an embodiment of this application;
FIG. 3 is a diagram 2 of a structure of an engine hood control apparatus according to an embodiment of this application;
FIG. 4 is a diagram 3 of a structure of an engine hood control apparatus according to an embodiment of this application;
FIG. 5 is a diagram 1 of a structure of a lifting apparatus according to an embodiment of this application;
FIG. 6 is a diagram 2 of a structure of a lifting apparatus according to an embodiment of this application;
FIG. 7 is a diagram 3 of a structure of a lifting apparatus according to an embodiment of this application;
FIG. 8 is a schematic flowchart of an engine hood control method according to an embodiment of this application;
FIG. 9 is a diagram of time points in a control method applied to an engine hood control apparatus according to an embodiment of this application; and
FIG. 10 is a diagram of a structure of a vehicle according to an embodiment of this application.

### DESCRIPTION OF EMBODIMENTS

The following describes technical solutions in embodiments of this application with reference to accompanying drawings in embodiments of this application. In descriptions of this application, unless otherwise specified, "/" represents an "or" relationship between associated objects. For example, A/B may represent A or B. In this application, "and/or" describes only an association relationship between associated objects and represents that three relationships may exist. For example, A and/or B may represent the following three cases: Only A exists, both A and B exist, and only B exists, where A or B may be singular or plural. In addition, in the descriptions of this application, "a plurality of" means two or more than two unless otherwise specified. "At least one of the following items (pieces)" or a similar expression thereof refers to any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural. In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference. In addition, in embodiments of this application, terms such as "example" or "for example" are used to give an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner for ease of understanding.

In addition, service scenarios described in embodiments of this application are intended to describe the technical solutions in embodiments of this application more clearly, and do not constitute a limitation on the technical solutions provided in embodiments of this application. A person of ordinary skill in the art can know that the technical solutions provided in embodiments of this application are also applicable to similar technical problems with emergence of new service scenarios.

In a traffic accident, different parts of a pedestrian may be injured. According to related statistics, in a traffic accident, if a pedestrian collides with a hard component at a front end of a vehicle, the head of the pedestrian is more vulnerable to serious injury. A reason is that, when the pedestrian collides with the hard component at the front end of the vehicle, a lower leg of the pedestrian is in first contact with a bumper at the front end of the vehicle, and then the lower leg is forcibly pushed forward by the bumper. As a result, the upper body of the pedestrian moves toward an engine hood of the vehicle, and the head collides with the engine hood.

As we know, injury to the head of the pedestrian is highly likely to endanger life. Therefore, how to protect the head of the pedestrian as much as possible in a traffic accident is an urgent problem to be resolved.

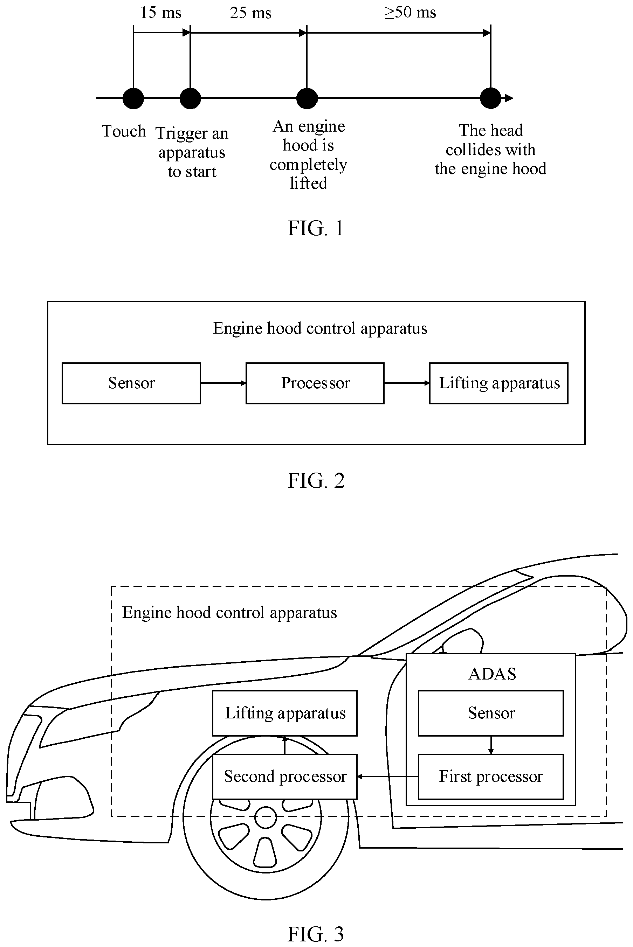

To protect the head of the pedestrian as much as possible in the traffic accident, a pop-up engine hood is usually used. Correspondingly, a pyrotechnic lifting apparatus is usually disposed in a front compartment of the vehicle, and a pressure sensor is disposed at the front end of the vehicle. Refer to FIG. 1. When an object is in contact with the bumper at the front end of the vehicle, within about 15 ms, the pressure sensor may sense that a collision event occurs, and trigger the pyrotechnic lifting apparatus to start. After about 25 ms, the pyrotechnic lifting apparatus lifts the engine hood. After the engine hood is lifted, if the object in contact is a pedestrian, it takes about 50 ms or more time for the head of the pedestrian to collide with the engine hood.

The engine hood to be lifted can reduce a distance between the head of the pedestrian and the engine hood during a collision, thereby reducing interaction force between the head and the engine hood, and reducing collision strength between the head and the engine hood.

However, sensing the collision event via the pressure sensor is not accurate enough. For example, the pressure sensor cannot identify whether a collision object of the vehicle is a pedestrian. When the object in contact with the bumper at the front end of the vehicle is not a pedestrian, the engine hood is also triggered to be lifted or popped up, affecting user experience.

In addition, the pyrotechnic lifting apparatus usually lifts the engine hood through pyrotechnic explosion (for example, signal triggering based on an automated-driving control unit (automated-driving control unit, ACU), gunpowder explosion, and cylinder lifting). Such an apparatus is usually disposable, and is difficult to be recycled. Each time the apparatus is used, a new apparatus needs to be replaced. Consequently, costs are high, and user experience is also affected.

Based on the foregoing content, an embodiment of this application provides an engine hood control apparatus. Refer to FIG. 2. The apparatus includes a sensor, a processor, and a lifting apparatus. The sensor is configured to obtain environment information. The processor is configured to: determine, based on the environment information, that a pedestrian collides with a vehicle, and control the lifting apparatus to lift an engine hood of the vehicle when the pedestrian collides with the vehicle.

The apparatus may determine, based on the environment information, whether the pedestrian collides with the vehicle, and may lift the engine hood when the pedestrian collides with the vehicle. After the pedestrian collides with the vehicle, the head of the pedestrian may collide with the engine hood. Lifting the engine hood when the pedestrian collides with the vehicle may also be understood as lifting the engine hood before the head of the pedestrian collides with the engine hood. In this way, sufficient lifting time can be reserved, to ensure that the engine hood has been lifted when the head of the pedestrian collides with the engine hood. A collision distance between the head of the pedestrian and the engine hood has been reduced, and collision strength between the head of the pedestrian and the engine hood has also been greatly reduced. This reduces a degree of injury to the head of the pedestrian.

In addition, the engine hood is lifted when it is determined that the pedestrian collides with the vehicle. This can reduce a case in which the engine hood is lifted due to a collision between a non-pedestrian and the vehicle. In other words, a case in which the engine hood is mistakenly lifted can be reduced, and user experience of the vehicle can be ensured.

In some embodiments, the sensor may include an infrared sensor, an ultrasonic sensor, a millimeter-wave radar, a lidar, a monocular camera, a binocular camera, and the like. The environment information obtained by the sensor may include object information, vehicle information, and the like in an environment in which the vehicle is located, and an object in the environment in which the vehicle is located may be a static object or a dynamic object like a pedestrian, a tree, a building, or another vehicle. The object information may reflect whether the object is a pedestrian, and the object information may include a location of the object, a traveling direction of the object, a traveling speed of the object, and the like, for example, a location of the pedestrian, a traveling direction of the pedestrian, and a traveling speed of the pedestrian. In addition, the vehicle information may include a vehicle speed of the ego vehicle, a traveling direction of the ego vehicle, and the like.

In some possible application scenarios, the processor may determine, based on the environment information (for example, the object information) obtained by the sensor, whether a possible collision object of the vehicle is a pedestrian. In addition, in some other possible application scenarios, when the collision object is a pedestrian, the processor may continue to determine whether the pedestrian collides with the vehicle based on the environment information (for example, the location of the pedestrian, the traveling direction of the pedestrian, the traveling speed of the pedestrian, and the vehicle speed and the traveling direction of the ego vehicle). In this way, interference caused by a collision between the non-pedestrian and the vehicle can be eliminated, and a case in which the engine hood is mistakenly lifted due to the collision between the non-pedestrian and the vehicle can be reduced.

In some other possible application scenarios, after determining that the collision object of the vehicle is a pedestrian, the processor may further determine time to collision (time to collision, TTC) between the pedestrian and the vehicle based on the environment information (for example, the location of the pedestrian, the traveling direction of the pedestrian, the traveling speed of the pedestrian, and the vehicle speed and the traveling direction of the ego vehicle). In addition, when the time to collision is within preset duration, the processor controls the lifting apparatus to lift the engine hood, to lift the engine hood before the head of the pedestrian collides with the engine hood of the vehicle.

The time to collision indicates how long before the pedestrian collides with the vehicle. The preset duration may be set to 200 ms to 1s. To be specific, when the time to collision is 600 ms or 700 ms, and the time to collision is within 200 ms to 1s, the processor controls the lifting apparatus to lift the engine hood. In this embodiment of this application, the preset duration is not specifically limited.

In some embodiments, when the collision object of the vehicle is a pedestrian, the processor may determine a probability of the collision between the pedestrian and the vehicle based on the environment information (for example, the location of the pedestrian, the traveling direction of the pedestrian, the traveling speed of the pedestrian, and the vehicle speed and the traveling direction of the ego vehicle). When the probability of the collision is greater than or equal to a preset threshold, it is determined that the pedestrian collides with the vehicle.

That the probability of the collision is greater than or equal to the preset threshold may indicate that a collision between the pedestrian and the vehicle is inevitable, that is, the pedestrian collides with the vehicle.

In this case, the engine hood is lifted in advance, and sufficient lifting time is reserved, to ensure that the engine hood has been lifted when the head of the pedestrian collides with the engine hood. The collision distance between the head of the pedestrian and the engine hood has been reduced, and collision strength between the head of the pedestrian and the engine hood has also been greatly reduced. This reduces a degree of injury to the head of the pedestrian.

In some embodiments, the processor may further receive a braking signal when determining that the collision object of the vehicle is a pedestrian, to control the vehicle speed to decrease in response to the braking signal. In this way, the vehicle speed can be reduced in advance. In some cases, braking can succeed before the vehicle collides with the pedestrian, to avoid starting the lifting apparatus. If the collision with the pedestrian cannot be avoided (that is, the probability of the collision is greater than or equal to the preset threshold), the vehicle speed can be reduced to some extent, impact force caused when the vehicle collides with the pedestrian can be reduced, and damage to the pedestrian can be reduced. The braking signal may be a signal sent by another component, module, processor, or the like of the vehicle. The another component, module, or processor may send the braking signal to the processor when the collision object of the vehicle is a pedestrian in this embodiment of this application. This is not specifically limited in embodiments of this application.

In addition, when the collision with the pedestrian cannot be avoided, the processor may also control the lifting apparatus to lift the engine hood in a time period during which the vehicle decelerates. That is, the engine hood is lifted during deceleration. In this way, impact force caused when the vehicle collides with the pedestrian is reduced, and the collision distance between the head of the pedestrian and the engine hood after the collision is also reduced. This reduces damage to the pedestrian from two aspects.

The probability of the collision may also indicate a probability of a braking failure after it is determined that the collision object is a pedestrian. A higher probability of the collision indicates a higher probability of the braking failure.

In some possible application scenarios, the sensor may obtain the environment information in real time in a process in which the vehicle speed of the vehicle decreases, and the processor may determine the time to collision, the probability of the collision, and the like between the vehicle and the pedestrian in real time based on the environment information. It may be understood that the time to collision changes in real time, or even becomes smaller. In some cases, the probability of the collision may also change. For example, when a vehicle suddenly turns and hits a wall to avoid collision with a pedestrian in front of the vehicle, the probability of the collision may decrease or become 0; or when the pedestrian in front of the vehicle quickly evades, the probability of the collision may decrease or become 0.

In some embodiments, if a collision between the pedestrian and the vehicle is inevitable, the processor may further receive a lifting signal when the time to collision between the pedestrian and the vehicle is within the preset duration, and control, in response to the lifting signal, the lifting apparatus to lift the engine hood of the vehicle. In this way, the engine hood is lifted before the head of the pedestrian collides with the engine hood of the vehicle. The lifting signal may be a signal sent by another component, module, or processor of the vehicle. The another component, module, or processor may send the lifting signal to the processor when the collision between the pedestrian and the vehicle is inevitable and the time to the collision is within the preset duration in this embodiment of this application. This is not specifically limited in embodiments of this application.

In some embodiments, the processor may further include a first processor and a second processor. In addition, the sensor and the first processor may be independent components or devices on the vehicle, or the sensor and the first processor may be provided by an advanced driver assistance system (advanced driver assistance system, ADAS) on the vehicle.

The ADAS may include the sensor mounted on the vehicle. The ADAS uses the sensor mounted on the vehicle to collect environment data or information (for example, moving information of the collision object or moving information of the vehicle) inside and outside the vehicle in real time, to identify, detect, and track static and dynamic objects. In this way, the user driving the vehicle can perceive a possible danger as soon as possible, and the ADAS can attract attention of the user and improve driving safety.

When the ADAS provides the sensor and the first processor, as shown in FIG. 3, the ADAS may send a lifting signal to the second processor based on a processing result of the first processor, so that the second processor may receive the lifting signal and control, in response to the lifting signal, the lifting apparatus to lift the engine hood of the vehicle.

In some possible application scenarios, when the first processor determines that the collision object of the vehicle is a pedestrian, the ADAS may further send a braking signal to the second processor, so that the second processor receives the braking signal and controls a vehicle speed to decrease in response to the braking signal.

It may be understood that, in the foregoing case, the second processor does not need to perform operations such as determining the collision object and determining a control occasion of the lifting apparatus, and only needs to control the vehicle and/or the lifting apparatus based on the control signal sent by the ADAS.

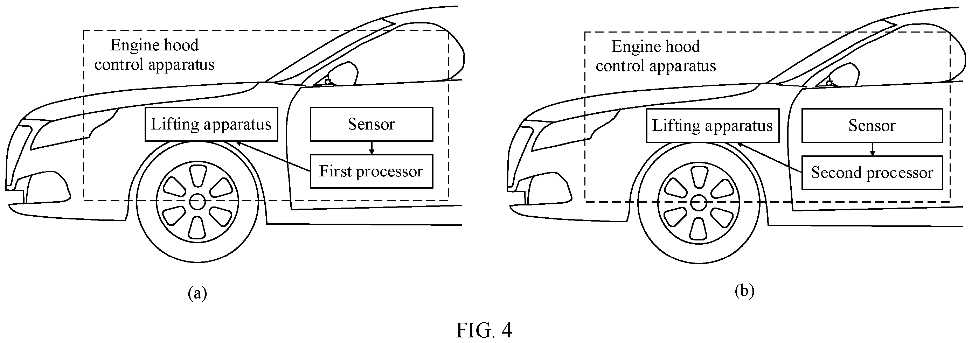

In some other embodiments, the ADAS may alternatively provide only the environment information obtained by the sensor. In this case, as shown in (a) in FIG. 4 and (b) in FIG. 4, the first processor and the second processor may alternatively be a same processor, that is, the second processor is the first processor, or the first processor is the second processor. In this case, both the first processor and the second processor may implement functions that can be implemented by the first processor and the second processor in the foregoing embodiments.

Alternatively, if the sensor is an independent component or device on the vehicle, the first processor and the second processor may be a same processor.

In some embodiments, the lifting apparatus may include a spring and a latch. After the spring is released, the engine hood may be lifted. When the latch is closed, the spring may be compressed. When the latch is opened, the spring may be released. For example, the lifting apparatus may be disposed on a side that is of a front compartment of the vehicle and that is close to a root of the engine hood or close to a windshield.

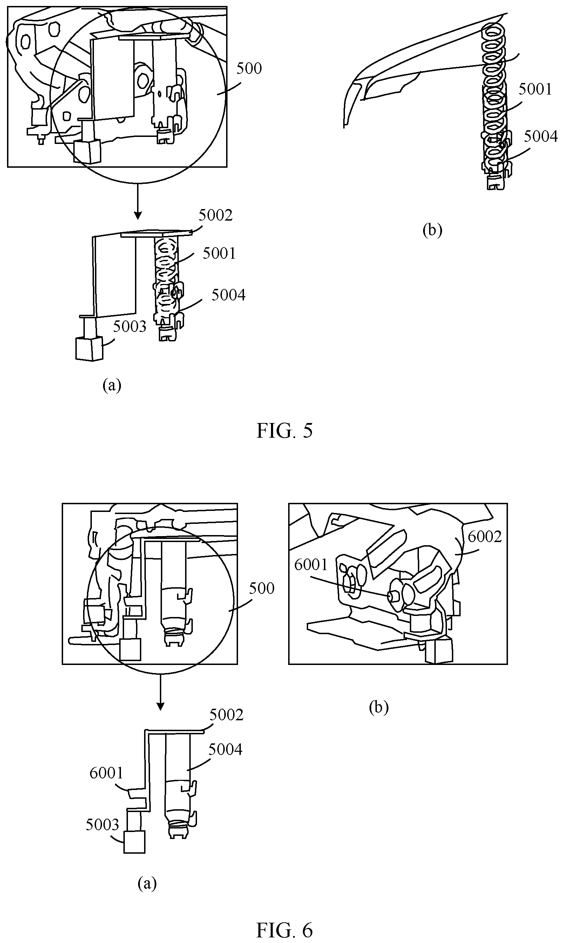

For example, the latch may include a guard for compressing the spring and a motor connected to the guard. Refer to (a) in FIG. 5. A lifting apparatus 500 includes a spring 5001, a guard 5002 configured to compress the spring 5001, and a motor 5003 connected to the guard 5002. For example, the spring 5001 may be placed in a spring sleeve 5004, and the guard 5002 is configured to block an opening of the spring sleeve 5004, to compress the spring 5001.

When controlling the lifting apparatus 500 to lift the engine hood, the processor may specifically drive the motor 5003 in the lifting apparatus 500, and then the motor 5003 drives the guard 5002 connected to the motor 5003 to rotate. For example, a rotation angle of the guard 5002 may range from 90° to 180°, for example, 90°, 100°, or 180°. After the guard 5002 rotates, as shown in (b) in FIG. 5, the spring 5001 may be released, and the released spring 5001 may push up the engine hood, to lift the engine hood. For example, after the guard 5002 rotates, the opening of the spring sleeve 5004 may be exposed, to release the spring 5001.

In some possible application scenarios, as shown in (a) in FIG. 6 and (b) in FIG. 6, the lifting apparatus 500 may further include a positioning pin 6001. The positioning pin 6001 is disposed on the guard 5002, and the positioning pin 6001 is configured to fasten a hinge 6002 of the engine hood. The hinge 6002 may connect the engine hood to the front compartment of the vehicle, and the hinge 6002 may be fastened to fasten the root of the engine hood.

When the motor 5003 drives the guard 5002 to rotate, the guard 5002 may drive the positioning pin 6001 to move, for example, bring the positioning pin 6001 out of a fixed position of the hinge 6002, to release the hinge 6002. After the hinge 6002 is released, the root of the engine hood is also released, and then the engine hood is also released. The engine hood may be lifted by the spring 5001.

In some embodiments, the lifting apparatus may include a shape memory spring. The shape memory spring represents a spring made of a shape memory material. The processor may power on or power off the shape memory spring. When the shape memory spring is powered off, the shape memory spring is in a compressed state of the spring memory. When the shape memory spring is powered on, the shape memory spring is in a released state. In this case, when the pedestrian collides with the vehicle, the processor may control the shape memory spring to be powered on to release the shape memory spring, and further control the engine hood to be lifted. In this way, the engine hood is lifted before the head of the pedestrian collides with the engine hood.

It may be understood that the spring or the shape memory spring has a high elasticity coefficient, so that the engine hood is pushed up or lifted in the released state. In addition, in some possible application scenarios, a height of the spring or the shape memory spring in the released state may range from 80 mm to 120 mm. For example, the height may be 80 mm, 90 mm, 100 mm, 120 mm, or the like. This is not specifically limited in embodiments of this application.

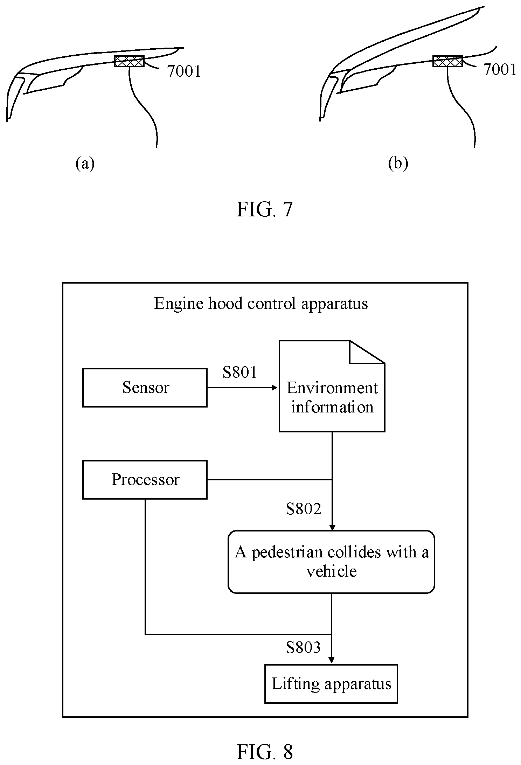

In some embodiments, the lifting apparatus may include an electromagnet. For example, as shown in (a) in FIG. 7, the electromagnet 7001 has magnetic force when being powered on, and may attract the engine hood of the vehicle, to control the engine hood to be closed. As shown in (b) in FIG. 7, magnetic force disappears when the electromagnet 7001 is powered off, the engine hood of the vehicle cannot be attracted, and the engine hood is released, so that the engine hood is lifted. In this case, when the pedestrian collides with the vehicle, the processor may control the electromagnet to be powered off, and further control the engine hood to be lifted. In this way, the engine hood is lifted before the head of the pedestrian collides with the engine hood.

The lifting apparatus provided in embodiments of this application is an apparatus that can be repeatedly used for a plurality of times.

For example, in the apparatus shown in (a) in FIG. 5 and (b) in FIG. 5, after the spring is released, the spring may be further re-compressed, and wait to be released by the guard next time. The guard may rotate in an opposite direction in a spring compression process until the spring can be re-compressed, or the guard may continue to rotate at a current position until the spring can be re-compressed.

For another example, after the shape memory spring is released, the shape memory spring may also be powered off again, to restore to the compressed state, and wait for next power-on to be released.

For another example, in the apparatus shown in (a) in FIG. 7 and (b) in FIG. 7, after the electromagnet is powered off, the electromagnet may be further powered on again to attract the engine hood, and wait for next power-off to release the engine hood.

It can be learned that the lifting apparatus that can be repeatedly used for a plurality of times can greatly reduce replacement costs of the vehicle user. In addition, even if the engine hood pops up due to a collision between the vehicle and a non-pedestrian, the lifting apparatus can be used again, to prevent the user from reinstalling the entire lifting apparatus, thereby greatly improving user experience of the vehicle.

An embodiment of this application further provides an engine hood control method. The method may be applied to the foregoing engine hood control apparatus. As shown in FIG. 8, the method may include the following steps S801 to S803.

S801: A sensor obtains environment information.

The environment information may include object information, vehicle information, and the like in an environment in which a vehicle is located, for example, a location of a pedestrian, a traveling direction of the pedestrian, a traveling speed of the pedestrian, a vehicle speed of the vehicle, and a traveling direction of the vehicle.

After obtaining the environment information, the sensor may send the environment information to a processor.

S802: The processor determines, based on the environment information, that the pedestrian collides with the vehicle.

In some embodiments, the processor may determine a collision object of the vehicle based on the environment information. The collision object may be a pedestrian, an object (for example, a tree, a building, or a vehicle other than the ego vehicle), or the like. Therefore, when the collision object is the pedestrian, the processor may perform subsequent further processing.

In addition, in some embodiments, if the collision object of the vehicle is the pedestrian, the processor may further determine a probability of a collision between the pedestrian and the vehicle based on the environment information. For example, the processor may determine the probability of the collision between the pedestrian and the vehicle based on the location of the current pedestrian, the traveling speed of the pedestrian, the vehicle speed and the traveling direction of the ego vehicle, and the like. When the probability of the collision is greater than or equal to a preset threshold, it is determined that the pedestrian collides with the vehicle, or the collision between the pedestrian and the vehicle is inevitable.

In some other embodiments, when it is determined that the collision object of the vehicle is the pedestrian, the processor may further send a braking signal. The processor receives the braking signal, and controls the vehicle speed to decrease in response to the braking signal. In some cases, braking can succeed before the vehicle collides with the pedestrian, to avoid starting a lifting apparatus. If collision with the pedestrian cannot be avoided, a vehicle speed can be reduced to some extent, impact force caused when the vehicle collides with the pedestrian can be reduced, and damage to the pedestrian can be reduced.

In addition, in some other embodiments, when determining that the collision object of the vehicle is the pedestrian, the processor may further determine time to collision between the pedestrian and the vehicle based on the environment information. For example, the processor may determine the time to collision between the pedestrian and the vehicle based on the current location of the pedestrian, a traveling speed of the pedestrian, the vehicle speed and the traveling direction of the ego vehicle, and the like.

S803: When the pedestrian collides with the vehicle, the processor controls the lifting apparatus to lift the engine hood of the vehicle.

In some embodiments, the processor may determine, based on the time to collision between the pedestrian and the vehicle determined in the foregoing embodiment, when the pedestrian and the vehicle are to collide, to control the lifting apparatus to lift the engine hood before the pedestrian collides with the vehicle. In this way, the engine hood is lifted before the head of the pedestrian collides with the vehicle. The time to collision becomes shorter as the vehicle and the pedestrian gradually approach each other. For example, when the time to collision is within preset duration, the processor may control the lifting apparatus to lift the engine hood of the vehicle.

In some other embodiments, when the collision between the pedestrian and the vehicle is inevitable (that is, when the probability of the collision between the pedestrian and the vehicle is greater than or equal to the preset threshold), the processor may receive a lifting signal. Therefore, when the time to collision between the pedestrian and the vehicle is within the preset duration, the processor controls, in response to the lifting signal, the lifting apparatus to lift the engine hood of the vehicle.

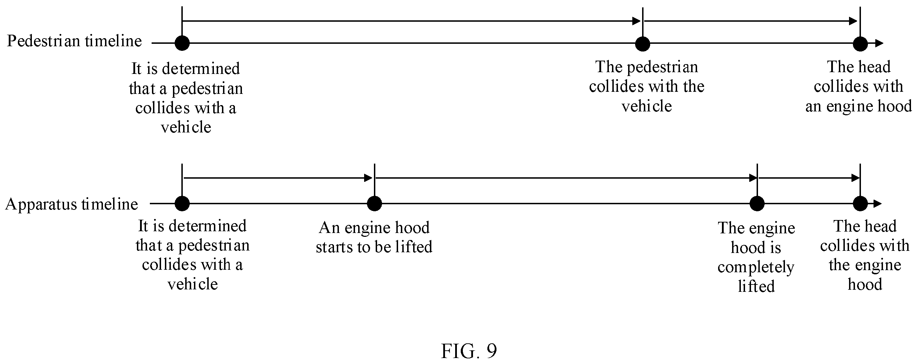

For example, as shown in FIG. 9, two timelines respectively represent a timeline of the pedestrian and a timeline of the engine hood control apparatus. It can be learned from FIG. 9 that, before the head of the pedestrian collides with the vehicle, the engine hood is lifted in advance, and sufficient lifting time is reserved, to ensure that the engine hood has been lifted when the head of the pedestrian collides with the engine hood. A collision distance between the head of the pedestrian and the engine hood has been reduced, and the collision strength between the head of the pedestrian and the engine hood has also been greatly reduced. This reduces a degree of injury to the head of the pedestrian.

In some possible application scenarios, with reference to the specific structure of the lifting apparatus in the foregoing embodiment, when the pedestrian collides with the vehicle, the processor may further control the motor to drive a guard to move, to release the spring, and further control the engine hood to be lifted. In this way, the engine hood is lifted before the head of the pedestrian collides with the engine hood. The released spring may push up the engine hood.

In addition, in some other possible application scenarios, with reference to the specific structure of the lifting apparatus in the foregoing embodiment, when the processor controls the motor to drive the guard to move, the guard also drives a positioning pin to move, to release a hinge fastened by the positioning pin. In this way, the engine hood fastened via the hinge is released. In this way, when the spring is released, because the engine hood is in a released state, the engine hood may also be pushed up by the spring.

In some possible application scenarios, with reference to the specific structure of the lifting apparatus in the foregoing embodiment, when the pedestrian collides with the vehicle, the processor may further control a shape memory spring to be powered on to release the shape memory spring, to control the engine hood to be lifted. In this way, the engine hood is lifted before the head of the pedestrian collides with the engine hood. The released shape spring may push up the engine hood.

In some possible application scenarios, with reference to the specific structure of the lifting apparatus in the foregoing embodiment, the processor may further control an electromagnet to be powered off when the pedestrian collides with the vehicle, to control the engine hood to be lifted. In this way, the engine hood is lifted before the head of the pedestrian collides with the engine hood. Magnetic force disappears after the electromagnet is powered off, the engine hood cannot be attracted, and the engine hood can be released, so that the engine hood can be lifted.

It can be learned from the foregoing content that, according to the engine hood control method provided in embodiments of this application, whether the pedestrian collides with the vehicle may be determined based on the environment information, and the engine hood is lifted when the pedestrian collides with the vehicle. After the pedestrian collides with the vehicle, the head of the pedestrian may collide with the engine hood. Lifting the engine hood when the pedestrian collides with the vehicle may also be understood as lifting the engine hood before the head of the pedestrian collides with the engine hood. In this way, sufficient lifting time can be reserved, to ensure that the engine hood has been lifted when the head of the pedestrian collides with the engine hood. A collision distance between the head of the pedestrian and the engine hood has been reduced, and collision strength between the head of the pedestrian and the engine hood has also been greatly reduced. This reduces a degree of injury to the head of the pedestrian.

In addition, the engine hood is lifted when it is determined that the pedestrian collides with the vehicle. This can reduce a case in which the engine hood is lifted due to a collision between a non-pedestrian and the vehicle. In other words, a case in which the engine hood is mistakenly lifted can be reduced, and user experience of the vehicle can be ensured.

In some solutions, a plurality of embodiments of this application may be combined, and a combined solution is implemented. Optionally, some operations in processes of the foregoing method embodiments are randomly combined, and/or a sequence of some operations is randomly changed. In addition, an execution sequence between steps of each process is merely an example, and does not constitute a limitation on an execution sequence between the steps. The steps may alternatively be performed in another execution sequence. It is not intended to indicate that the execution order is the only order in which these operations can be performed. A person of ordinary skill in the art may figure out a plurality of manners to re-rank the operations described in embodiments of this application. In addition, it should be noted that process details in an embodiment of this application are also applicable to another embodiment in a similar manner, or different embodiments may be used in combination.

In addition, some steps in the method embodiments may be equivalently replaced with other possible steps. Alternatively, some steps in the method embodiments may be optional, and may be deleted in some use scenarios. Alternatively, another possible step may be added to the method embodiments.

In addition, the method embodiments may be implemented separately or in combination.

It may be understood that, to implement the foregoing functions, the hood control apparatus includes corresponding hardware and/or software modules for performing the functions. With reference to algorithm steps of examples described in embodiments disclosed in this specification, this application can be implemented in a form of hardware or a combination of hardware and computer software. Whether a function is performed by hardware or hardware driven by computer software depends on particular applications and design constraints of the technical solutions. A person skilled in the art may use different methods to implement the described functions for each particular application with reference to embodiments. However, it should not be considered that the implementation goes beyond the scope of this application.

In this embodiment of this application, the processor may be divided into functional modules based on the foregoing method examples. For example, each functional module may be obtained through division based on each corresponding function, or two or more functions may be integrated into one processing module. The integrated module may be implemented in a form of hardware. It should be noted that module division in embodiments is an example and is merely logical function division. In practice, there may be another division manner.

An embodiment of this application further provides a vehicle. The vehicle may include the sensor, the processor, the lifting apparatus, and the like in the foregoing embodiments, or the vehicle may include the engine hood control apparatus in the foregoing embodiments. For functions performed by the sensor, the processor, the lifting apparatus, and the like, refer to content in the foregoing embodiments. Details are not described herein again.

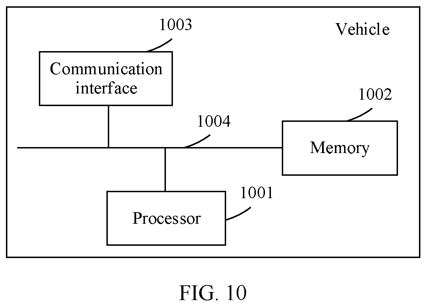

In some other possible application scenarios, as shown in FIG. 10, the vehicle provided in this embodiment of this application may further include one or more processors 1001, a memory 1002, and a communication interface 1003.

The memory 1002 and the communication interface 1003 are coupled to the processor 1001. For example, the memory 1002, the communication interface 1003, and the processor 1001 may be coupled together through a bus 1004.

The communication interface 1003 is configured to perform data transmission with another device. The memory 1002 stores computer program code. The computer program code includes computer instructions. When the computer instructions are executed by the processor 1001, the vehicle is enabled to perform the engine hood control method in embodiments of this application.

The processor 1001 may be a processor or a controller, for example, a central processing unit (Central Processing Unit, CPU), a general-purpose processor, a digital signal processor (Digital Signal Processor, DSP), an application-specific integrated circuit (Application-Specific Integrated Circuit, ASIC), a field programmable gate array (Field Programmable Gate Array, FPGA), another programmable logical device, a transistor logical device, a hardware component, or any combination thereof. The processor may implement or execute various example logical blocks, modules, and circuits described with reference to content of the present disclosure. The processor may be a combination of processors implementing a computing function, for example, a combination of one or more microprocessors, or a combination of the DSP and a microprocessor.

The bus 1004 may be a peripheral component interconnect (Peripheral Component Interconnect, PCI) bus, an extended industry standard architecture (Extended Industry Standard Architecture, EISA) bus, or the like. The bus 1004 may be categorized as an address bus, a data bus, a control bus, or the like. For ease of representation, only one thick line is used to represent the bus in FIG. 10, but this does not mean that there is only one bus or only one type of bus.

An embodiment of this application further provides a computer-readable storage medium. The computer-readable storage medium includes computer instructions. When the computer instructions are run on a vehicle, the vehicle may perform related method steps in the foregoing method embodiments.

An embodiment of this application further provides a computer program product. When the computer program product runs on a vehicle, the vehicle is enabled to perform related method steps in the foregoing method embodiments.

The vehicle, the computer storage medium, or the computer program product provided in this application are all configured to perform the corresponding methods provided above. Therefore, for beneficial effect that can be achieved by the vehicle, the computer storage medium, or the computer program product, refer to beneficial effect in the corresponding methods provided above. Details are not described herein again.

The foregoing descriptions about implementations allow a person skilled in the art to clearly understand that, for the purpose of convenient and brief description, division of the foregoing functional modules is used as an example for illustration. In actual application, the foregoing functions can be allocated to different modules and implemented based on a requirement, that is, an inner structure of an apparatus is divided into different functional modules to implement all or some of the functions described above.

In the several embodiments provided in this application, it should be understood that the disclosed apparatus and method may be implemented in other manners. For example, the described apparatus embodiment is merely an example. For example, the module or division into the units is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or the communication connections between the apparatuses or units may be implemented in electronic, mechanical, or other forms.

The units described as separate parts may or may not be physically separate, and parts displayed as units may be one or more physical units, may be located in one place, or may be distributed on different places. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions in embodiments of this application essentially, or the part making a contribution, or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps of the methods described in embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. An engine hood control apparatus, comprising a sensor, a processor, and a lifting apparatus, wherein
the sensor is configured to obtain environment information; and
the processor is configured to: determine, based on the environment information, that a pedestrian collides with a vehicle, and control the lifting apparatus to lift an engine hood of the vehicle when the pedestrian collides with the vehicle.

2. The apparatus according to claim 1, wherein the lifting apparatus comprises a spring, a guard for compressing the spring, and a motor connected to the guard, and the processor is further specifically configured to: when the pedestrian collides with the vehicle, control the motor to drive the guard to move, to release the spring, and further control the engine hood to be lifted.

3. The apparatus according to claim 2, wherein the lifting apparatus further comprises a positioning pin, the positioning pin is disposed on the guard, and the positioning pin is configured to fasten a hinge of the engine hood; and
the processor is further specifically configured to control the motor to drive the guard to move, to drive the positioning pin to move to release the hinge, and to further release the engine hood for the engine hood to be lifted.

4. The apparatus according to claim 1, wherein the lifting apparatus comprises a shape memory alloy spring, and the shape memory alloy spring is in a compressed state when being powered off; and the processor is further specifically configured to: when the pedestrian collides with the vehicle, control the shape memory alloy spring to be powered on to release the shape memory alloy spring, to control the engine hood to be lifted.

5. The apparatus according to claim 1, wherein the lifting apparatus comprises an electromagnet, and the electromagnet is configured to attract the engine hood when being powered on, to control the engine hood to be closed; and the processor is further specifically configured to: when the pedestrian collides with the vehicle, control the electromagnet to be powered off, to control the engine hood to be lifted.

6. The apparatus according to any one of claims 1 to 5, wherein the processor is specifically configured to determine, based on the environment information, that a collision object of the vehicle is the pedestrian.

7. The apparatus according to claim 6, wherein the processor is further specifically configured to: when the collision object of the vehicle is the pedestrian, determine a probability of a collision between the pedestrian and the vehicle based on the environment information; and when the probability of the collision is greater than or equal to a preset threshold, determine that the pedestrian collides with the vehicle.

8. The apparatus according to claim 7, wherein the processor is further specifically configured to: when the collision object of the vehicle is the pedestrian, determine time to collision between the pedestrian and the vehicle based on the environment information.

9. The apparatus according to claim 8, wherein the processor is further specifically configured to: when the time to collision is within preset duration, control the lifting apparatus to lift the engine hood of the vehicle.

10. The apparatus according to any one of claims 1 to 9, wherein the environment information comprises a location of the pedestrian, a traveling direction of the pedestrian, a traveling speed of the pedestrian, a vehicle speed of the vehicle, and a traveling direction of the vehicle.

11. The apparatus according to claim 9, wherein
the processor is further specifically configured to: in response to a lifting signal received when the time to collision is within the preset duration, control the lifting apparatus to lift the engine hood of the vehicle.

12. The apparatus according to claim 6, wherein
the processor is further specifically configured to: when the collision object of the vehicle is the pedestrian, receive a braking signal, and control a vehicle speed to decrease in response to the braking signal.

13. An engine hood control method, applied to an engine hood control apparatus, wherein the engine hood control apparatus comprises a sensor, a processor, and a lifting apparatus; and
the method comprises:
obtaining, by the sensor, environment information; and
determining, by the processor based on the environment information, that the pedestrian collides with the vehicle, and controlling the lifting apparatus to lift the engine hood of the vehicle when the pedestrian collides with the vehicle.

14. The method according to claim 13, wherein the lifting apparatus comprises a spring, a guard for compressing the spring, and a motor connected to the guard; and controlling, by the processor, the lifting apparatus to lift the engine hood of the vehicle when the pedestrian collides with the vehicle comprises: when the pedestrian collides with the vehicle, controlling, by the processor, the motor to drive the guard to move, to release the spring, so as to control the engine hood to be lifted.

15. The method according to claim 14, wherein the lifting apparatus further comprises a positioning pin, the positioning pin is disposed on the guard, the positioning pin is configured to fasten a hinge of the engine hood, and the guard is configured to drive the positioning pin to move to release the hinge, to release the engine hood to lift the engine hood.

16. The method according to claim 13, wherein the lifting apparatus comprises a shape memory spring, and the shape memory spring is in a compressed state when being powered off; and controlling, by the processor, the lifting apparatus to lift the engine hood of the vehicle when the pedestrian collides with the vehicle comprises: when the pedestrian collides with the vehicle, controlling, by the processor, the shape memory spring to be powered on to release the shape memory spring, to control the engine hood to be lifted.

17. The method according to claim 13, wherein the lifting apparatus comprises an electromagnet, and the electromagnet is configured to attract the engine hood when being powered on, to control the engine hood to be closed; and controlling, by the processor, the lifting apparatus to lift the engine hood of the vehicle when the pedestrian collides with the vehicle comprises: when the pedestrian collides with the vehicle, controlling, by the processor, the electromagnet to be powered off, to control the engine hood to be lifted.

18. The method according to any one of claims 13 to 17, wherein the method further comprises:
determining, by the processor based on the environment information, that a collision object of the vehicle is the pedestrian.

19. The method according to claim 18, wherein determining, by the processor based on the environment information, that the pedestrian collides with the vehicle comprises:
when the collision object of the vehicle is the pedestrian, determining, by the processor, a probability of a collision between the pedestrian and the vehicle based on the environment information; and when the probability of the collision is greater than or equal to a preset threshold, determining that the pedestrian collides with the vehicle.

20. The method according to claim 19, wherein the method further comprises:
when the collision object of the vehicle is the pedestrian, the processor determines time to collision between the pedestrian and the vehicle based on the environment information.

21. The method according to claim 20, wherein controlling, by the processor, the lifting apparatus to lift the engine hood of the vehicle when the pedestrian collides with the vehicle comprises:
when the time to collision is within preset duration, controlling, by the processor, the lifting apparatus to lift the engine hood of the vehicle.

22. The method according to any one of claims 13 to 21, wherein the environment information comprises a location of the pedestrian, a traveling direction of the pedestrian, a traveling speed of the pedestrian, a vehicle speed of the vehicle, and a traveling direction of the vehicle.

23. The method according to claim 21, wherein controlling, by the processor, the lifting apparatus to lift the engine hood of the vehicle when the pedestrian collides with the vehicle comprises:
controlling, by the processor in response to a lifting signal received when the time to collision is within the preset duration, the lifting apparatus to lift the engine hood of the vehicle.

24. The method according to claim 18, wherein the method further comprises:
when the collision object of the vehicle is the pedestrian, receiving, by the processor, a braking signal, and controlling a vehicle speed to decrease in response to the braking signal.

25. A vehicle, comprising the engine hood control apparatus according to any one of claims 1 to 12.
